# EUROPÄISCHE PATENTANMELDUNG

(11) **EP 2 741 027 A2**
(43) Veröffentlichungstag der Anmeldung: **11.06.2014**
(21) Anmeldenummer: 13182742.0
(22) Anmeldetag: 03.09.2013
(51) Int. Cl.: F24J 2/52, F24J 2/54

(54) **Tragvorrichtung für Solarpaneele**

(30) Priorität: 04.12.2012 AT 12712012
(71) Anmelder: Scheider Solutions, 1040 Wien (AT)
(72) Erfinder: Scheider, Josef, 1230 Wien (AT)
(74) Vertreter: Patentanwälte Barger, Piso & Partner

(57) **Zusammenfassung**

Die Erfindung betrifft eine Solaranlage, mit einem, gegebenenfalls aus Einzelpaneelen (4) bestehenden, Solarpaneel (2) und mit einem Rahmen (5), der um eine horizontale Schwenkachse (15) einer Tragvorrichtung (3) schwenkbar gelagert ist.

Um eine mechanisch stabile und universell verwendbare Tragvorrichtung zu schaffen, ist vorgesehen, dass diese zumindest einen im Boden verankerten Pfosten (4), der bevorzugt ein U-Profil aufweist, umfasst, dass am oberen Ende des Pfostens eine Hutze (11) mit ihm verbunden ist, die zwei fluchtende Löcher (12) aufweist. Damit korrespondiert zumindest ein Loch (12') im Rahmen (5) und definiert so die Schwenkachse (15). Ein Bolzen (13) ragt durch die Löcher (12, 12') und ermöglicht so die Schwenkbarkeit des Paneels. Am Rahmen (5) ist zumindest ein Verstellarm (7) fest montiert, der einen Kulissenträger (8) mit einer Kulisse (9) aufweist, die mit einer am Pfosten (4) angeordneten, lösbaren Feststellvorrichtung (10) zusammenwirkt.

## Beschreibung

Die Erfindung betrifft eine Tragvorrichtung für Solarpaneele entsprechend dem Oberbegriff des Anspruches 1.

Solarpaneele bzw. deren Montageweise lassen sich, grob gesagt, in fest montierte und in beweglich montierte einteilen. Die fest montierten Paneele werden in die am Aufstellungsort günstigste Orientierung gebracht und so befestigt, beweglich montierte ruhen auf komplexen Konstruktionen und ihre Orientierung wird mittels Motoren der Sonne nachgeführt. Die fest montierten ruhen vermittels eines Gerüsts zumeist auf Punktfundamenten oder Streifenfundamenten, was den Vorteil hat, dass die Vorbereitungen zur Montage einfach gehalten werden können, nachteilig aber ist, dass nur Aufstellplätze in Frage kommen, die dieser Fundamentierungsart entsprechen, somit entweder ebene Flächen oder geneigte Flächen, die aber keine oder keine merkliche Bombierung aufweisen und möglichst genau nach Süden gerichtet sind. Die beweglich montierten Solarpaneele sind zumeist zu deutlich größeren Einheiten (in m² gemessen) als die fest montierten Solarpaneele zusammengefasst und auf massiven, turmartigen oder säulenartigen Konstruktionen montiert, wobei durch entsprechende Hebel und Winkel und daran angebrachte Motoren die Beweglichkeit sichergestellt wird. Die Zusammenfassung in größere Einheiten, wird trotz der damit verbundenen Probleme mit der Windempfindlichkeit, durch die hohen Kosten für die Verstellmechanismen und deren Steuerung notwendig.

Es gibt auch Sonderformen, die in der Praxis aber kaum Bedeutung erlangt haben, es wird dazu auf die EP 2 520 875 verwiesen. Diese Druckschrift offenbart, ein Solarpaneel um eine horizontale Achse schwenkbar zu lagern und dabei mittels eines, an einem Kragarm stark exzentrisch befestigten Gegengewichtes, in der gewünschten Schräglage zu halten. Damit wird es dem Solarpaneel ermöglicht, bei Windbeanspruchung auszuweichen, wobei die Größe der Ausweichbewegung durch das Straffen eines Seiles begrenzt wird. Die Lagerung des Solarpaneels erfolgt in einem U-förmigen Gestell, das das Paneel seitlich umfasst, zentral am Schenkel des U ist eine Basis in Form eines zylindrischen Stutzens vorgesehen, mit der die Tragvorrichtung auf nicht näher ausgeführte Weise befestigt wird.

Abgesehen davon, dass auf diese Weise bestenfalls starke Winde in einer Richtung in ihrer Wirkung abgeschwächt werden können und Winde aus anderen Richtungen weiterhin unberücksichtigt bleiben, wird die vom Paneel gelieferte Strommenge durch das Schaukeln der Paneele im Wind völlig erratisch und de facto unbrauchbar. Dazu kommt es durch die Ausbildung des U-förmigen Trägers, dass die Tragkonstruktion voluminös und schwer wird, ohne zur Stabilitätsverbesserung beizutragen.

Aus der W02011/147437 und der EP 2 363 663 ist jeweils ein vertikaler Träger für ein Solarpaneel bekannt, das um eine waagrechte Achse in einem Aufsatz des Trägers verschwenkbar ist. Dabei wird die Schräglage des Paneels mittels eines Stabes, der gelenkig am Paneel befestigt ist und der mehrere Öffnungen aufweist, mit deren Hilfe er am Träger in passender Lage mittels eines Bolzens formschlüssig fixiert wird. Die im rauen Betrieb jeweils gelenkig, über Bolzen, einzuleitenden Kräfte, insbesondere die Windkräfte, machen eine entsprechend massive Ausführung notwendig, die mit der jeweils dargestellten, zierlichen Ausbildung nichts zu tun hat. Dazu kommt, dass die Justierung nur schrittweise erfolgen kann.

Es ist Ziel und Aufgabe der Erfindung, ein Solarpaneel bzw. eine Tragvorrichtung für ein solches zu schaffen, bei dem die Orientierung während des Betriebs fest ist, aber an den Sommer- bzw. Wintersonnenstand angepasst werden kann, und auch auf Hängen montiert werden kann, deren Ausrichtung von der üblichen Südausrichtung stärker abweicht als es bisher möglich ist. Darüber hinaus soll die Tragvorrichtung mechanisch stabil und doch leicht und kostengünstig herstellbar und montierbar sein.

Diese Ziele werden erfindungsgemäß durch die im kennzeichnenden Teil des Anspruches 1 angegebenen Merkmale erreicht; mit anderen Worten, es wird ein vertikaler Ständer mit einem U-Profil verwendet, der in seinem obersten Bereich, gegebenenfalls in einer dort vorgesehenen Hutze, zwei Lager aufweist, die eine waagrecht und normal zur Ständerachse verlaufende Achse ausbilden, um die das Solarpaneel geschwenkt und in zumindest zwei Positionen, entsprechend dem Wintersonnenstand und dem Sommersonnenstand, fixiert werden kann.

Das U-Profil des Pfostens ist bedeutsam, weil ein derartiges U-Profil wesentlich fester im Boden verankert, insbesondere einbetoniert, werden kann als ein Vierkantrohr oder gar ein zylindrisches Rohr; die Befestigung des Solarpaneels mittels zweier im oberen Bereich der Schenkel des U-Profils angeordneten Lagern ist geometrisch kompakt und erlaubt eine sehr direkte und damit zuverlässige Krafteinleitung in den Pfosten. Der Verstellmechanismus besteht aus einem fest am Paneel angelenkten Positionierstab, der eine Kulisse trägt, mittels der er am Pfosten im Abstand vom Schwenklager für das Paneel geführt und in beliebiger Lage fixiert werden kann. Wegen der Montage im Freien werden bevorzugt Fixiermittel gewählt, die unverlierbar mit der Tragvorrichtung verbunden sind, wie im Folgenden näher beschrieben wird.

Die Erfindung wird im Folgenden anhand der Zeichnung näher beschrieben, wobei
die Fig. 1, rein schematisch, eine erfindungsgemäße Tragvorrichtung in Seitenansicht samt Solarpaneel in Sommerstellung zeigt,
die Fig. 2 in gleicher Ansicht das gleiche Paneel in Winterstellung und
die Fig. 3 ein Detail.

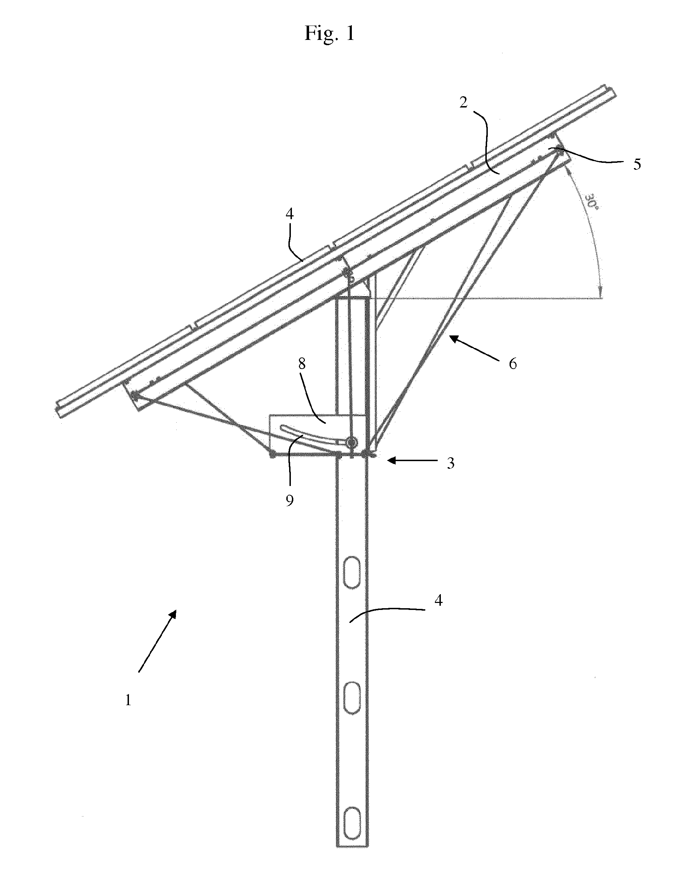

In Fig. 1 ist eine, in ihrer Gesamtheit mit 1 bezeichnete Solaranlage schematisch dargestellt. Sie weist ein Solarpaneel 2 und eine erfindungsgemäße Tragvorrichtung 3 auf. Das Solarpaneel 2 besteht im Wesentlichen aus den eigentlichen Einzelpaneelen 2', einem Rahmen 5 und einer, in ihrer Gesamtheit mit 6 bezeichneten, Montageanordnung. Wesentlicher Teil dieser Montageanordnung ist ein Verstellarm 7, der fest mit dem Rahmen 5 verbunden ist und an seinem unteren Ende einen Kulissenträger 8 samt Kulisse 9 aufweist. Die gesamte Steuerungselektronik, die Kabel zur Ableitung des generierten Stromes und andere Details sind aus Gründen der Übersichtlichkeit und weil sie mit der Erfindung im Kern nichts zu tun haben, nicht dargestellt.

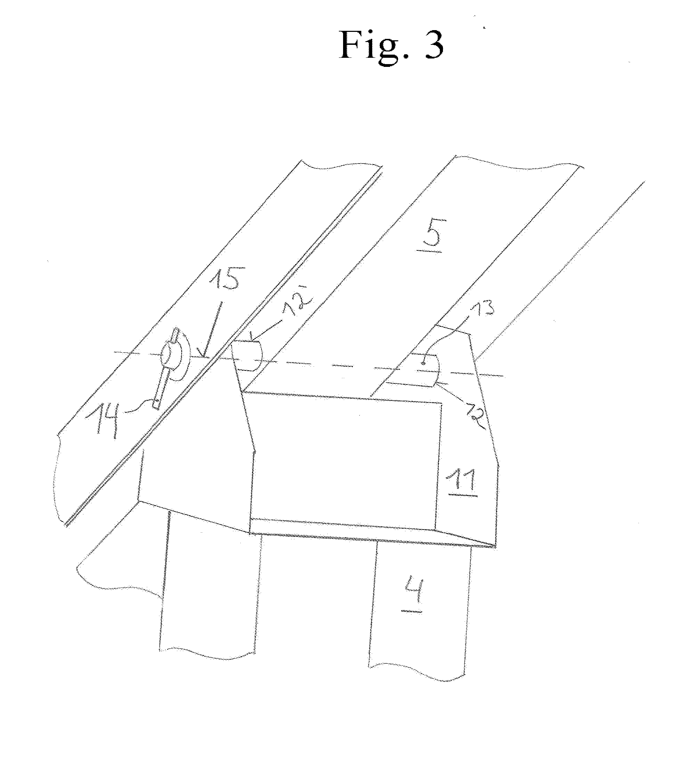

Die Tragvorrichtung 3 besteht im Wesentlichen aus einem Pfosten 4 mit U-Profil, dessen unteres Ende dazu bestimmt ist, im Erdreich eingeschlagen oder einbetoniert oder eingesandet zu werden, und an dessen oberen Ende, auf einer Hutze 11 zwei Lager (Fig. 3) vorgesehen sind, die eine gemeinsame, normal zur Pfostenachse verlaufende Schwenkachse 15 definieren, die im Montagezustand waagrecht und in Ost-Westrichtung verläuft, und um die das Solarpaneel 2 mittels seines Rahmens 5 schwenkbar gelagert ist.

Weiters ist im oberen Bereich, aber doch mit Abstand von dem oberen Pfostenende, eine Feststellvorrichtung 10 vorgesehen, die im einfachsten und bevorzugten Fall aus einer parallel zur genannten Schwenkachse 15 verlaufenden und mit dem Pfosten passend verbundenen Gewindestange samt passender Mutter besteht.

Das Solarpaneel, bzw. dessen Rahmen 5, ist zur Erhöhung seiner mechanischen Stabilität durch dünne Stangen oder auch durch Seile, dies hängt von der verwendeten Stärke des Rahmens, der Größe des Paneels und den zu erwarteten Beanspruchungen ab, mittels einer Art Verspannung mit dem Verstellarm 7 und dem Kulissenträger 8 verbunden, wodurch Vibrationen und Flatterbewegungen des Rahmens und damit der Solarpaneele 2' vermieden oder zumindest reduziert werden.

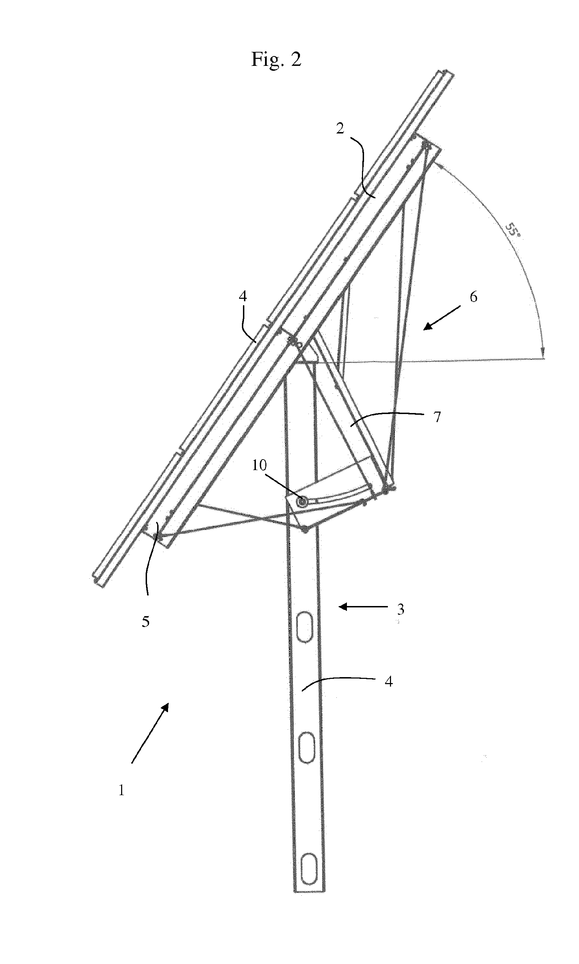

Die Kulisse 9 des Kulissenträgers 8 kooperiert mit der Feststellvorrichtung 10 dergestalt, dass durch das Aufschrauben einer Mutter die jeweilige Lage des Kulissenträgers 8 bzgl. der Feststellvorrichtung 10 durch Reibschluss fixiert werden kann, wodurch auch die Schräglage des Paneels bezüglich des Pfostens 4 fixiert ist. Hier zeigt die Fig. 1 mit etwa 30° Neigung des Paneels, gemessen von der Horizontalen weg, die Sommerstellung, die Fig. 2 mit etwa 55° die Winterstellung, die auch dazu beiträgt, dass Schnee zuverlässig abrutscht und so weder eine Beeinträchtigung der Leistung des Solarpaneels noch eine zusätzliche mechanische Belastung der gesamten Vorrichtung mit sich bringt.

Aus Fig. 3 ist die Befestigung zwischen Rahmen 5 und Pfosten 3 näher ersichtlich, im dargestellten Ausführungsbeispiel ist eine stabile Hutze 11, hier im Wesentlichen in U-Form, entlang des oberen Randes des Pfostens 3 aufgeschweißt, diese Hutze 11, bevorzugt dickwandiger als der Pfosten 3, trägt Löcher, bevorzugt Bohrlöcher 12, korrespondierend mit entsprechenden Löchern 12' im Rahmen 5, durch die ein Bolzen 13 mit entsprechender Fixierung, beispielsweise durch eine Mutter, oder, wie dargestellt, einen Splint 14, ragt. Dieser Bolzen 13 sichert die Verdrehbarkeit des Rahmens 5 und damit des Paneels um die horizontale Schwenkachse 15. Da eine Verstellung der Winkellage des Rahmens 5 praktisch nur zweimal jährlich erfolgt, ist hier keine besondere Maßnahme für eine Beweglichkeit zu treffen.

Bevorzugt wird, dass die verwendeten Materialien, soweit sie miteinander in Kontakt kommen entweder bezüglich eventueller Korrosionsgefahr aufeinander abgestimmt sind, oder durch Abstandhalter geometrisch voneinander getrennt gehalten werden. So ist es durchaus denkbar und in vielen Fällen angebracht, durch eine entsprechende Kunststoffhülse und Trennscheiben zwischen den aneinander zu liegen kommenden metallischen Flächen des Pfostens bzw. der Hutze und des Rahmens, dafür Sorge zu tragen, dass es zu keiner Korrosion zufolge unterschiedlicher elektrochemischer Potentiale kommen kann.

Wie bereits Eingangs ausgeführt, ist die Ausbildung des Pfostens 4 als U-Profil für seine Verankerung im Erdreich günstig, nahe zu unabdingbar. Wenn die Stabilität dies erforderlich macht, kann im oberirdisch verbleibenden Bereich an ein oder zwei oder mehr Stellen das Profil durch Verschweißen mit einem Plättchen gegen Aufbeulen oder Verquarren im Torsionsfall (Windbelastung) weiter verstärkt werden.

Ob der Schwenkarm 7 und der Kulissenträger 8 nur einmal vorgesehen sind oder beidseits des Pfostens 4, wobei in letzterem Fall auch der Schwenkarm 4 mit einem U-Profil ausgebildet und damit wesentlich versteift werden kann, hängt von den zu erwartenden mechanischen Beanspruchungen ab, es kann auch der untere Bereich des Verstellarms 7 mit dem dann doppelt ausgebildeten Kulissenträger 8 und einem Verbindungsteil einen den Pfosten 4 beweglich umschließenden Spannrahmen bilden. Spannrahmen deshalb, weil der Rahmen 2 mittels der oben erwähnten dünnen Stangen oder Seile mit ihm verbunden ist, was keine feste Abstützung, sondern eher eine Abspannung, jedenfalls aber Erhöhung der mechanischen Steifigkeit bewirkt.

Auch im Bereich der Feststellvorrichtung 10 ist eine Abstimmung der verwendeten Materialien im Hinblick auf zu erwartende Korrosion günstig, wegen der räumlichen Konzentration des Kontaktes wird hier aber mit entsprechend korrosionsfesten Beilagscheiben das Auslangen zu finden sein.

Die Erfindung ist nicht auf das dargestellte und beschriebene Ausführungsbeispiel beschränkt, sondern kann verschiedentlich abgewandelt werden. So kann die Hutze die Form eines Rohres annehmen, statt zweier Löcher in Stegen im Rahmen kann ein rohrförmiger Teil den Abstand zwischen den parallelen Wänden mit Löchern der Hutze einnehmen, es können vier Stege, innerhalb und außerhalb der Wände der Hutze zur Verstärkung vorgesehen sein. Weiters können Maßnahmen für eine Justierung um die vertikale Hochachse des Pfostens 4 getroffen sein, beispielsweise durch entsprechende Drehbarkeit der Hutze, oder eine geteilte Hutze, deren Teile um eine Vertikalachse zueinander Drehbar und stufenlos fixierbar sind, um beim Einbetonieren des Pfostens nicht zu allzu genau auf dessen Winkellage achten zu müssen, etc..

Als Materialien kommen alle im rauen Betrieb, insbesondere in alpinen Lagen, taugliche Materialien in Frage, diese auszuwählen ist für den Fachmann metallischer Konstruktionen in Kenntnis der Erfindung und des Standortes kein Problem.

### Bezugszeichenverzeichnis:

| | | | |
|---|---|---|---|
| 1 | Solaranlage | 9 | Kulisse |
| 2 | Solarpaneel, 2' Einzelpaneel | 10 | Feststellvorrichtung |
| 3 | Tragvorrichtung | 11 | Hutze |
| 4 | Pfosten | 12 | Bohrlöcher, 12' Bohrlöcher |
| 5 | Rahmen | 13 | Bolzen |
| 6 | Montageanordnung | 14 | Splint |
| 7 | Verstellarm | 15 | Schwenkachse |
| 8 | Kulissenträger | | |

## Patentansprüche

1. Solaranlage, mit einem, gegebenenfalls aus Einzelpaneelen (4) bestehenden, Solarpaneel (2) und mit einem Rahmen (5), der um eine horizontale Schwenkachse (15) einer Tragvorrichtung (3) schwenkbar gelagert ist, **dadurch gekennzeichnet, dass** die Tragvorrichtung zumindest einen im Boden verankerten Pfosten (4) mit U-Profil aufweist, dass am oberen Ende des Pfostens, gegebenenfalls in einer mit ihm verbundenen Hutze (11), zwei fluchtende Löcher (12) aufweist, die mit zumindest einem Loch (12') im Rahmen (5) korrespondieren und die Schwenkachse (15) definieren, dass ein Bolzen (13) durch die Löcher (12, 12') ragt und so die Schwenkbarkeit ermöglicht, dass weiters am Rahmen (5) zumindest ein Verstellarm (7) fest montiert ist, der zumindest einen Kulissenträger (8) mit einer Kulisse (9) aufweist, und dass am Pfosten (4) eine lösbare Feststellvorrichtung (10) angeordnet ist, die mit der Kulisse (9) zusammenwirkt.

2. Solaranlage nach Anspruch 1, **dadurch gekennzeichnet, dass** die Kulisse Kreisbogenform aufweist.

3. Solaranlage nach Anspruch 2, **dadurch gekennzeichnet, dass** die Feststellvorrichtung (10) aus einer parallel zur Schwenkachse (15) verlaufenden Gewindestange samt Mutter besteht.

4. Solaranlage nach einem der Ansprüche 1 bis 3, **dadurch gekennzeichnet, dass** die Kulisse (9) samt Feststellvorrichtung (10) eine Verschwenkbarkeit des Solarpaneels (2) zumindest zwischen 30° und 55° gegenüber der Horizontalen erlaubt.

5. Solaranlage nach einem der voranstehenden Ansprüche, **dadurch gekennzeichnet, dass** der Rahmen (5) mittels Abspannvorrichtungen mit dem Verstellarm (7) und/oder dem Kulissenträger (8) verbunden ist.

6. Solaranlage nach einem der voranstehenden Ansprüche, **dadurch gekennzeichnet, dass** der Verstellarm (7) mit dem doppelt ausgebildeten Kulissenträger (8) einen den Pfosten (4) umschließenden Spannrahmen bildet.
